Europäisches Patentamt

European Patent Office

Office européen des brevets

(11) Publication number: 0 481 074 A1

## EUROPEAN PATENT APPLICATION
### published in accordance with Art. 158(3) EPC

(21) Application number: 90905668.1

(22) Date of filing: 06.04.90

(86) International application number: PCT/JP90/00468

(87) International publication number: WO 91/15760 (17.10.91 91/24)

(51) Int. Cl.5: G01N 30/48, G01N 30/88, B01D 15/08

(43) Date of publication of application: 22.04.92 Bulletin 92/17

(84) Designated Contracting States: DE FR GB

(71) Applicant: KABUSHIKI KAISYA ADVANCE
5-7, Nihonbashi Kobuna-cho
Chuo-ku Tokyo 103(JP)
Applicant: Tsukagoshi, Shigeru
5-2-4-209, Ogikubo, Suginami-ku
Tokyo 167(JP)

(72) Inventor: TSUKAGOSHI, Shigeru
5-2-4-209, Ogikubo, Suginami-ku
Tokyo 167(JP)
Inventor: ATSUMI, Kazuhiko
Arakawahausu, 1-6-2, Mukougaoka,
Bunkyo-ku
Tokyo 113(JP)
Inventor: KUSUNOKI, Shinichirou
2-23-21, Oizumigakuen-cho, Nerima-ku
Tokyo 178(JP)

Inventor: AOKI, Hideki
39-6, Motoyoyogi-cho
Shibuya-ku, Tokyo 151(JP)
Inventor: HIGASHIKATA, Masaaki,
Yamaguchisou
, -65-6, Kokuryou-cho
Choufu-shi, Tokyo 182(JP)
Inventor: SHIN, Yoshiharu
Fujimidai 4-207, 1-2-54, Fujimi-cho
Higashimurayama-shi, Tokyo 189(JP)
Inventor: TSUZAKI, Naoko
Dainikoshijikoupo, 17-13, Sugenotoro
Tama-ku
Kawasaki-shi, Kanagawa 214(JP)
Inventor: YAMAGUCHI, Syunpei
Haitsuitou, 5-7-33-101, Nakameguro
Meguro-ku, Tokyo 153(JP)

(74) Representative: Cohausz & Florack
Patentanwälte
Postfach 14 01 61 Schumannstrasse 97
W-4000 Düsseldorf 1(DE)

(54) PACKING OF COLUMN FOR FRACTIONATING AND ASSAYING HIGH SPECIFIC GRAVITY LIPOPROTEIN AND/OR HDL CHOLESTEROL.

(57) A packing essentially comprising a porous calcium phosphate compound.

# Fig.2

```
┌─────────────────┐
│ ··· Serum       │
└─────────────────┘
          ↓
    ┌──────────────────────────┐
    │  ┌─────────────────────┐ │
Pre-treatment│ Sample injection    │ │
    │  │ portion             │ │
    │  └─────────────────────┘ │
    │           ↓              │
    │  ┌─────────────────────┐ │        ┌──────────────────────┐
    │  │   · Sample          │ │  ←──── │ Selective potentiator │
    │  └─────────────────────┘ │        │ addition              │
    └──────────────────────────┘        └──────────────────────┘
          ↓
    ┌──────────────────────────┐
    │  ┌─────────────────────┐ │        ┌──────────────────────┐
Column body│ Lipid adsorbent     │ │  ←── │ Powder-sample contacting │
    │  └─────────────────────┘ │        └──────────────────────┘
    │           ↓              │
    │  ┌─────────────────────┐ │
    │  │ Fractionation separation │
    │  │ portion             │ │
    │  └─────────────────────┘ │
    │           ↓              │
    │  ┌─────────────────────┐ │
    │  │ Fractionated liquid │ │
    │  │ release             │ │
    │  └─────────────────────┘ │
    └──────────────────────────┘
          ↓
    ┌ ─ ─ ─ ─ ─ ─ ─ ─ ─ ─ ─ ─ ┐
    │  ┌─────────────────────┐ │
    │  │ Measurement portion │ │
    │  └─────────────────────┘ │
    └ ─ ─ ─ ─ ─ ─ ─ ─ ─ ─ ─ ─ ┘
```

# EP 0 481 074 A1

## TECHNICAL FIELD

This invention relates to a column packing (or filler) for high specific gravity lipoprotein and/or HDL cholesterol fractionation measurement.

## BACKGROUND ART

The recent trend in Japan toward the adoption of a western diet has led to the opening of a large number of supermarkets after midnight supplying a vast diversity of food, etc. Also, a gourmet boom has led to an intake of foods having a higher calory content. Accordingly, the growth of diseases caused by over-eating, etc., such as diabetes, hyperlipemia or fatty liver, has increased, and accordingly, it appears to be time to cut down on the intake of many foods. On the other hand, from a global point of view, in many developping countries and countries in a state of war, due to an extremely poor hygienic environment or to a severe lack of food, there are many people who are suffering from an irreversible malnutrition. The therapy of the diseases due to nutritional disorders caused by such an excessive or insufficient nutrition merely by negative methods, such as a nutritional limitation or supplementation, etc., does not always give good results, and accordingly, in most practical clinics, a large number of therapeutical methods, including a drug therapy such as the hyperlipemia therapeutic method, the plasma exchange-plasma separation method, and the central vein nutrition method, etc., have been investigated.

Also, simultaneously with the establishment of the therapeutical method, due to the progress made in clinical tests in the diagnosis field, such as the advent of the enzymatic method and development of a biological automatic analyzer, the tested number of lipids in blood has increased, and further, a precise diagnosis, such as an apoprotein measurement, is now possible, and the significance thereof in clinical tests is increasing. The measurement of high specific gravity lipoprotein and/or HDL cholesterol (HDL-C) fractions has become substantially routine among the series of lipid tests. This is because it is widely known that there is a negative correlation between the HDL-C concentration and the onset ratio of arterioscrelotic diseases, particularly ischemic diseases, and this is considered to be an important clinical test item.

Nevertheless, in developed countries where various problems arise such as increased medical costs, etc., or in countries with small medical budgets, the increasing clinical test costs are posing another problem. The HDL-C measurement of the prior art requires cumbersome operations such as a centrifugal precipitation, etc., and has a relatively higher cost, and therefore, although clinically necessary, it is not often used. For this reason, there is an urgent need for a rapid development of a simple, less expensive, and more accurate HDL-C measurement method.

## DISCLOSURE OF THE INVENTION

Accordingly, an object of the present invention is to provide a column packing which solves the problems of the high specific lipoprotein and/or HDL cholesterol fractionation measurement column packing of the prior art as described above, and enables a simple, inexpensive and accurate fractionation measurement of a high specific gravity lipoprotein and/or HDL cholesterol.

Other objects and advantages of the present invention will be apparent from the following description.

According to the present invention, there is provided a column packing for a high specific gravity protein and/or HDL cholesterol fractionation measurement, and comprising a porous calcium phosphate compound as the constituent.

## BRIEF DESCRIPTION OF THE DRAWINGS

The present invention is now described with reference to the accompanying drawings, wherein:

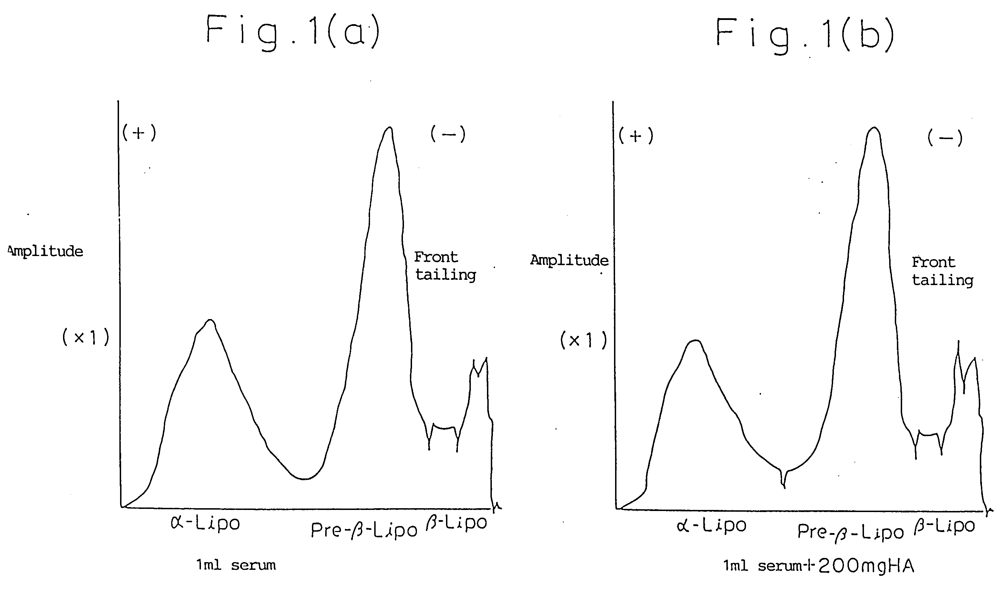

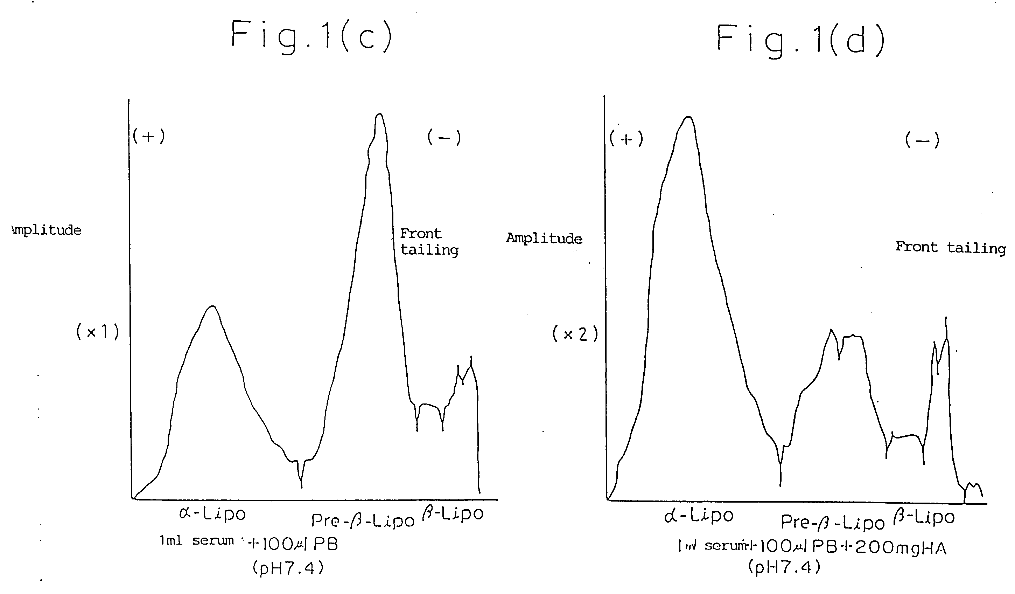

Fig. 1 shows the selectivity of an adsorption of serum lipoproteins onto hydroxyapatite(HA); Fig. 1a showing the distribution of lipoproteins in an original serum, Fig. 1b showing the distribution of lipoproteins in the supernatant in which 200 mg of HA is added to original serum, Fig. 1c showing the distribution of lipoproteins of a sample having a 1/10 amount of a phosphate buffer added to the original serum, and Fig. 1d showing the distribution of lipoproteins in the supernatant in which 200 mg of HA is added to the sample having a 1/10 amount of a phosphate buffer added to the original serum. In each Figure, the axis of the abscissa indicates the phoresis distance from the original point, and the axis of the ordinate shows the absorbance. In Fig. 1, $\alpha$-Lipo is $\alpha$-lipoprotein and $\beta$-Lipo is $\beta$-lipoprotein, respectively.

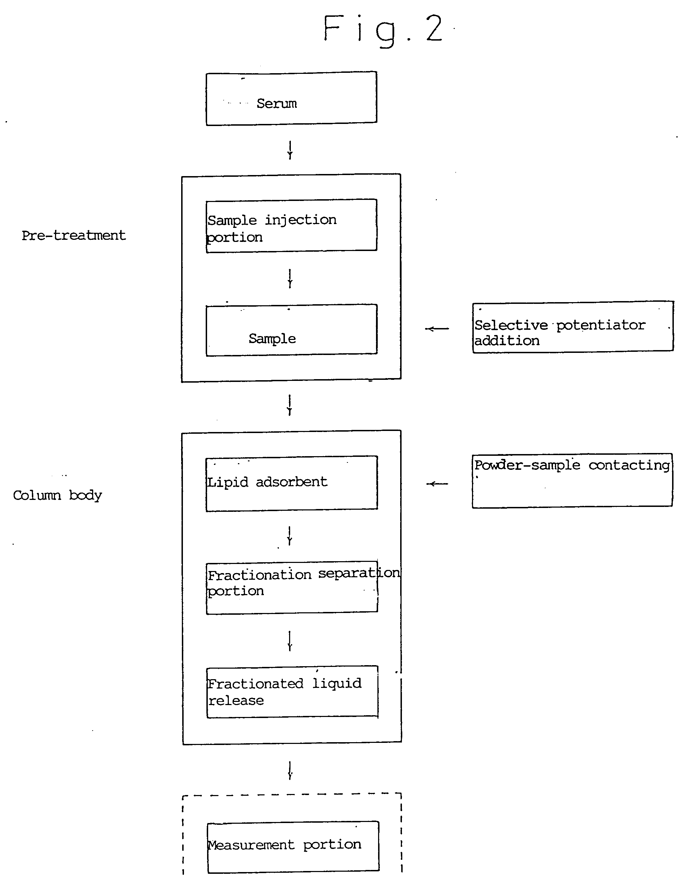

Fig. 2 shows the constitution of the system of the present adsorption column, and is broadly classified into the pre-treatment block and the main column block. Each block comprises a sample injection

3

portion, a serum-phosphate ion mixing portion, a powder-serum contacting portion, a lipid selective adsorbent main body portion, a powder-serum separation portion, and a sample fractionated liquid release portion. The fractionated liquid released is used for a pre-treatment during a cholesterol measurement in high specific gravity lipoproteins according to the chemical method, the enzymatic method, and the enzyme and/or antibody method (Dietschy JM, et al. Enzymatic measurement of free and esterified cholesterol levels in plasma and other biological preparations using the oxygen electrode in a modified glucose analyzer. Clin Chim Acta, 73 (3) 407-417, 1976), the EIA method, the RIA method or the electrophoretic method, measured by the manual method or by the automatic analytical method.

## BEST MODE OF CARRYING OUT THE INVENTION

The present inventors made an intensive study of this matter, and consequently found that a calcium phosphate compound, particularly a synthetic hydroxy-apatite used in a phosphate ion atmosphere selectively, adsorbs a low specific gravity lipoprotein and/or LDL-C, ultra-low specific gravity lipoprotein and/or VLDL-C, and a neutral fat or phospholipid, without an adsorption of a high specific gravity lipoprotein and/or HDL-C, and thus developed a column packing for a high specific gravity lipoprotein and/or HDL-C fractionation measurement using this adsorbent.

The lipid adsorbent according to the present invention, and the column design, are described in detail as follows.

The components constituting the column packing for a high specific gravity lipoprotein fractionation measurement according to the present invention are a calcium phosphate compound and a phosphorus containing compound. Also, to improve the lipid adsorption selectivity, a fractionation characteristic potentiating agent can be added. As such a fractionation characteristic potentiating agent, for example, there can be added surfactants, fatty acids, divalent ion chelating agents such as EDTA, EGTA, polyanions such as heparin, dextran sulfate, amino acids, proteins, oligoproteins, saccharides, saccharide containing compounds, heavy metal salts, heavy metal salt-containing compounds, phosphotungstic acid, and polyvalent metal ions such as manganese ion, magnesium ion, and nickel ion (Tsuguhiko Nakai: HDL-metabolism, Measurement and clinic, Chugai Igakusha, p. 102 - 140, 1986).

For the adsorbent to be filled in the column, to prevent a flowing out of the fine powder, a polyHEMA coating treatment can be applied to the surface of the powder (literature: Matsuhiko Suenaga et al., Direct Hemoperfusion 12 with Petroleum Pitch Activated Charcoal, Investigated Artificial Organ of Clinical Example, Vol. 6, No. 6, p. 442 - 445, 1977), or the adsorbent can be filled in a column through a filter such as a MILLIPORE filter having a pore size of 0.45 $\mu$m and manufactured by Millipore. The calcium phosphate compound to be used in the present invention can be made powdery or granular, but preferably, for example, a powder having a particle size of 0.01 $\mu$m to 500 $\mu$m is used. More preferably, the particle size is 80 $\mu$m to 300 $\mu$m, most preferably 150 $\mu$m to 180 $\mu$m. Also, a powder having spherical shaped particles formed by a spray drying method, and having a size as mentioned above, can be used.

The basic constitution of the column adsorbent for a high specific gravity lipoprotein fractionation measurement comprises an adsorbent composed of a calcium phosphate compound, a phosphoric acid atmosphere, and a lipid selective potentiating substance such as a metal anion or polyanion.

Examples of the calcium phosphate compound to be used in the present invention include synthetic hydroxyapatite, tricalcium phosphate, tetracalcium phosphate, calcium pyrophosphate, chlorine apatite, fluorine apatite, calcium phosphate type glass, or composites of these materials with other ceramics and/or glasses, those coated on the surface of metals or polymeric resins, and bone powder containing calcium phosphate.

As the phosphorus containing compound, for example, phosphates such as sodium phosphate and potassium phosphate, phosphoric acid, phosphate ion or phosphorus-containing organic materials, and pyrophosphoric acid, can be specifically mentioned. Alternatively, polyanions such as an arsenic-containing compound, heparin or dextran sulfate can be exemplified.

As the divalent ion chelating agent which can be used in the present invention, EDTA and EGTA can be exemplified, but citric acid, which is a chelating agent of, for example, calcium, can be also used.

To impart a selective lipid adsorption function of making HDL-C non-adsorptive to a calcium phosphate compound, the calcium phosphate compound must be in a phosphate ion atmosphere, and accordingly, an inorganic acid such as hydrochloric acid and sulfuric acid or an organic acid such as citric acid, succinic acid, lactic acid, and acetic acid, capable of liberating phosphate ions from the calcium phosphate compound, can be used as the constituent, and further, a substance having a material containing a calcium phosphate compound and/or a calcium phosphate compound treated with the inorganic acid, and the organic acid as mentioned above, can be also used in the present invention.

The calcium phosphate compound which can be used in the present invention, as described above, can be a synthetic hydroxyapatite, natural hydroxyapatite, tricalcium phosphate, tetracalcium phosphate, calcium pyrophosphate, chlorine apatite, and fluorine apatite, but among them, synthetic hydroxyapatite has an excellent lipid selectivity and adsorption ability. Also, calcium phosphate with a molar ratio of calcium to phosphorus (Ca/P) of 1 to 2, more preferably 1.5 to 1.7, is preferably used. To improve the adsorption characteristics of the lipid adsorbent, dried powder pulverized by a sample mill or a jet mill, or powder prepared by a calcination at a temperature of 60°C to 1300°C is preferably used. Particularly, a powder prepared by calcination at 300°C to 1200°C, more preferably 400°C to 800°C, is preferably used.

The block constitution of the adsorption system according to the present invention, as shown in Fig. 2, comprises a sample injection portion, a serum-selective potentiating substance mixing portion, a powder-serum contact portion, a lipid selective adsorbent main body, a powder-serum separation portion, and a sample fractionated liquid release portion.

As the column material, polymeric resins such as polypropylene, TPX, acryl, polycarbonate, silicone rubber, and Teflon, and polyurethane and segment polyurethane, which are anti-thrombus materials for medical use, may be exemplified. Also, glass, ceramics, and metal can be used. For the sample injection portion and the fractionated liquid release portion, for example, the inserting system, the packing system or the one touch lock system can be used.

The lipid adsorbent which can be used in the present invention may be formed, for example, from the adsorbent carrier as described above and phosphate ions and/or a lipid precipitating substance.

A simple system column can be constituted of (1) the injection cylinder connecting portion, (2) the lipid adsorbent main column portion, and (3) the fractionated liquid release portion.

## Examples

Examples are now given which show the characteristics of the lipid adsorbent and HDL-C measurement according to the present invention, but the present invention is not limited to these Examples.

## Experimental Example 1

A hydroxyapatite (HA) with a Ca/P molar ratio of 1.66 and synthesized by the wet process was pulverized by an attrition mill and calcined at 800°C to obtain a powder.

To 1 ml of human serum or 1 ml of a sample having 100 ml of a 0.5 M phosphate buffer (pH 7.4) added thereto, to make the whole volume to 1.1 ml, was added 200 mg of HA, and after the mixture was gently stirred at room temperature for 10 minutes, the centrifuged supernatant was subjected to an analysis of the distribution of the lipoprotein by using a Corning Universal Silum reagent and Helena densitometer.

The results are shown in Fig. 1; wherein Fig. 1a shows the distribution of lipoproteins in the original serum, and Fig. 1b the distribution of lipoproteins in the supernatant in which 200 mg of HA was added to original serum. Figure 1c shows the distribution of lipoproteins of the sample having a 1/10 amount of phosphate buffer added to the original serum, and Fig. 1d shows the distribution of lipoproteins in the supernatant in which 200 mg of HA was added to the sample having a 1/10 amount of phosphate buffer added to the original serum.

From the results in Fig. 1d, it can be understood that, although $\beta$-lipoproteins are absorbed, the $\alpha$-lipoproteins are non-adsorptive. The characteristic shown in Fig. 1d is that of the selectivity of lipoproteins of the adsorbent according to the present invention.

The homology between the $\alpha$-lipoprotein and HDL-C, and the homology between the $\beta$-lipoprotein and LDL-C, is widely known.

## Experimental Example 2

To determine the relationship between the total cholesterol value (TCHO) and the HDL cholesterol value (HDL-C), and the relationship to the HA amount, to 1000 $\mu$l of a sample supplemented with a phosphate buffer were added, respectively, 100 mg, 200 mg, 300 mg, and 400 mg of the HA used in Experimental Example 1, and the mixture was gently stirred at room temperature for 10 minutes. Then, the TCHO value and HDL-C value in the centrifuged supernatant were measured by the enzymatic method. For the measurement of TCHO, a cholesterol measurement kit C II manufactured by Wako Junyaku was used, and 200 mg/dl of the standard manufactured by Kyowa Medics was employed (sample amount 10 $\mu$l). For the measurement of HDL-C, a pre-treatment was conducted by a Determiner HDL kit manufactured by Kyowa Medics, and the measurement conducted by using a cholesterol measurement kit C II manufactured by Wako Junyaku. As the standard, 50 mg/dl of one manufactured by Kyowa Medics was employed (sample amount 50 $\mu$l). The measurement was conducted by a spectrophotometer Ultraspec II manufactured by Pharmacia-LKB.

The results are shown in Table 1.

Table 1

| | | | TCHO (mg/dl) | HDLC (mg/dl) |
|---|---|---|---|---|
| Case 1 | 1. Original serum | | 431 | 52 |
| | 2. 1 + 1/10 PB | | 372 | 49 |
| | 3. 2 + 100 mgHA | | 176 | 50 |
| | 4. 2 + 200 mgHA | | 57 | 48 |
| | 5. 2 + 300 mgHA | | 45 | 46 |
| | 6. 2 + 400 mgHA | | 41 | 42 |
| Case 2 | 1. Original serum | | 152 | 22 |
| | 2. 1 + 1/10 PB | | 134 | 20 |
| | 3. 2 + 100 mgHA | | 41 | 21 |
| | 4. 2 + 200 mgHA | | 24 | 21 |
| | 5. 2 + 300 mgHA | | 20 | 21 |
| | 6. 2 + 400 mgHA | | 19 | 20 |
| Case 3 | 1. Original serum | | 65 | 21 |
| | 2. 1 + 1/10 PB | | 62 | 20 |
| | 3. 2 + 100 mgHA | | 21 | 21 |
| | 4. 2 + 200 mgHA | | 19 | 21 |
| | 5. 2 + 300 mgHA | | 20 | 20 |
| | 6. 2 + 400 mgHA | | 20 | 20 |
| Case 4 | 1. Original serum | | 75 | 24 |
| | 2. 1 + 1/10 PB | | 69 | 22 |
| | 3. 2 + 100 mgHA | | 19 | 22 |
| | 4. 2 + 200 mgHA | | 18 | 20 |
| | 5. 2 + 300 mgHA | | 17 | 19 |
| | 6. 2 + 400 mgHA | | 16 | 17 |

The addition of 300 mg of HA makes the TCHO value substantially the same as the HDL-C value in all of the respective cases.

Experimental Example 3

To determine the total cholesterol value (TCHO), the HDL cholesterol value (HDL-C), and the lipid adsorption with HA, a simultaneous measurement by the enzymatic method was carried out. For the adsorption of HA, 500 $\mu$l of a phosphate buffer was added to 500 $\mu$l of a serum sample, and then 150 mg of HA used in Experimental Example 1 was added thereto. After slowly stirring at room temperature for 10 minutes, the TCHO value in the centrifuged supernatant was measured by the enzymatic method. For the measurement of HDL-C, 100 $\mu$l of a Determiner HDL precipitation reagent manufactured by Kyowa Medics was added to 200 $\mu$l of a serum sample, and after stirring, the mixture was left to stand for 10 minutes, followed by a measurement of the TCHO value in the centrifuged supernatant by the enzymatic method. For the measurement of TCHO, a cholesterol measurement kit C II manufactured by Wako Junyaku was used. For the standard, 50 mg/dl of one manufactured by Kyowa Medics was used (sample amount 50 $\mu$l). The measurement was carried out by a spectrophotometer Ultraspec II manufactured by Pharmacia-LKB.

The results are shown in Table 2.

Table 2

| | TCHO (mg/dl) | HA (mg/dl) | HDL-C (mg/dl) |
|---|---|---|---|
| Case 5 | 237 | 49 | 48 |
| Case 6 | 251 | 61 | 62 |

The TCHO concentration of the sample adsorbed with 150 mg of HA is substantially the same as the HDL-C concentration.

As apparent from the respective Examples as described above, the column using the column packing for a high specific gravity lipoprotein fractionation measurement according to the present invention can fractionate HDL-C in the serum without performing the precipitation and centrifugation operations. Also, the present column can be used not only merely as a pre-column which prepares fractionation samples to be measured by the manual method or the automatic analytical instrument, but also in the construction of an automated HDL-C measurement system assembled within an automatic analyzer, for example.

**Claims**

1. A column packing for a high specific gravity lipoprotein and/or HDL cholesterol fractionation measurement and comprising a porous calcium phosphate compound as the constituent.

2. A column packing according to claim 1, wherein the porous calcium phosphate compound is a powdery and/or granular calcium phosphate compound.

3. A column packing according to claim 1 or 2, containing at least one fractionation characteristic potentiator shown below which potentiates a high specific gravity lipoprotein and/or HDL cholesterol fractionation characteristic:
   a) phosphorus-containing compound
   b) surfactant
   c) fatty acid
   d) polyanion
   e) amino acid
   f) protein and/or glycoprotein
   g) saccharide and/or saccharide-containing compound
   h) heavy metal salt and/or heavy metal-containing compound
   i) polyvalent cation.

4. A column packing according to claim 1, 2, or 3, wherein the column packing for a high specific gravity lipoprotein and/or HDL cholesterol fractionation measurement adsorbs low specific gravity protein and/or LDL cholesterol and/or ultra-low specific gravity lipoprotein and/or VLDL cholesterol.

5. A column packing according to claim 1, 2 or 3, wherein the column packing for a high specific gravity lipoprotein and/or HDL cholesterol fractionation measurement does not adsorb a high specific gravity lipoprotein and/or HDL cholesterol.

6. A column packing according to claims 1, 2, 3, 4 or 5, wherein said adsorption column is used for a pre-treatment, and is used for the manual method or the automatic analytical method of cholesterol (HDL-C) measurement in a high specific gravity lipoprotein according to the chemical method, the enzymatic method, enzyme and/or antibody electrode method, the EIA method RIA method or the electrophoretic method.

7. A column packing according to claim 1, wherein said porous calcium phosphate compound has a Ca/P molar ratio of 1 to 2.

Fig.1(a)

Fig.1(b)

EP 0 481 074 A1

# Fig.1(c)

Fig.1(c)

Amplitude

(+)   (−)

Front
tailing

(×1)

α-Lipo    Pre-β-Lipo  β-Lipo

1ml serum +100μl PB
(pH7.4)

# Fig.1(d)

Fig.1(d)

Amplitude

(+)   (−)

Front tailing

(×2)

α-Lipo    Pre-β-Lipo  β-Lipo

1ml serum+100μl PB+200mgHA
(pH7.4)

EP 0 481 074 A1

# Fig. 2

```
                    ┌─────────────────────┐
                    │       Serum         │
                    └─────────────────────┘
                               ↓
                ┌───────────────────────────────┐
                │  ┌─────────────────────────┐  │
Pre-treatment   │  │ Sample injection        │  │
                │  │ portion                 │  │
                │  └─────────────────────────┘  │
                │               ↓               │        ┌──────────────────────────┐
                │  ┌─────────────────────────┐  │        │ Selective potentiator    │
                │  │                         │  │ ←───── │ addition                 │
                │  │       Sample            │  │        └──────────────────────────┘
                │  └─────────────────────────┘  │
                └───────────────────────────────┘
                               ↓
                ┌───────────────────────────────┐
                │  ┌─────────────────────────┐  │        ┌──────────────────────────┐
Column body     │  │ Lipid adsorbent         │  │ ←───── │ Powder-sample contacting │
                │  └─────────────────────────┘  │        └──────────────────────────┘
                │               ↓               │
                │  ┌─────────────────────────┐  │
                │  │ Fractionation separation│  │
                │  │ portion                 │  │
                │  └─────────────────────────┘  │
                │               ↓               │
                │  ┌─────────────────────────┐  │
                │  │ Fractionated liquid     │  │
                │  │ release                 │  │
                │  └─────────────────────────┘  │
                └───────────────────────────────┘
                               ↓
                ┌ ─ ─ ─ ─ ─ ─ ─ ─ ─ ─ ─ ─ ─ ─ ─┐
                │  ┌─────────────────────────┐  │
                │  │ Measurement portion     │  │
                │  └─────────────────────────┘  │
                └ ─ ─ ─ ─ ─ ─ ─ ─ ─ ─ ─ ─ ─ ─ ─┘
```

# INTERNATIONAL SEARCH REPORT

International Application No  PCT/JP90/00468

**I. CLASSIFICATION OF SUBJECT MATTER** (if several classification symbols apply, indicate all) <sup>6</sup>

According to International Patent Classification (IPC) or to both National Classification and IPC

Int. Cl$^5$    G01N30/48, 30/88, B01D15/08

**II. FIELDS SEARCHED**

Minimum Documentation Searched [7]

| Classification System | Classification Symbols |
|---|---|
| IPC | G01N30/48, 30/88, B01D15/08 |

Documentation Searched other than Minimum Documentation
to the Extent that such Documents are Included In the Fields Searched [8]

| | |
|---|---|
| Jitsuyo Shinan Koho | 1971 - 1990 |
| Kokai Jitsuyo Shinan Koho | 1971 - 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 62-91410 (Toa Nenryo Kogyo K.K.), 25 April 1987 (25. 04. 87) & AU, A1, 6300786 & EP, A2, 217614 & CN, A, 86107584 | 1, 2, 4-7 |
| A | JP, A, 1-155263 (Asahi Chemical Industry Co., Ltd.), 19 June 1989 (19. 06. 89), (Family: none) | 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 25, 1990 (25. 06. 90) | July 9, 1990 (09. 07. 90) |
| International Searching Authority | Signature of Authorized Officer |
| Japanese Patent Office | |

Form PCT/ISA/210 (second sheet) (January 1985)